# EUROPÄISCHE PATENTANMELDUNG

(11) **EP 3 805 721 A1**
(43) Veröffentlichungstag der Anmeldung: **14.04.2021**
(21) Anmeldenummer: 19306326.0
(22) Anmeldetag: 10.10.2019
(51) Int. Cl.: G01L 7/06, G01L 9/00, G01L 21/02, G01M 3/02, G01M 3/28

(54) **ÜBERWACHUNGSEINRICHTUNG FÜR EIN VAKUUMISOLIERTES SYSTEM**

(71) Anmelder: Nexans, 92400 Courbevoie (FR)
(72) Erfinder: ESSLER, Jürgen, 31547 Rehburg-Loccum (DE); SCHMIDT, Frank, 30855 Langenhagen (DE)
(74) Vertreter: Ipsilon

(57) **Zusammenfassung**

Es wird eine Überwachungseinrichtung (118) zur Überwachung der Dichtigkeit eines vakuumisolierten Systems vorgeschlagen, die einen Faltenbalg (108) aufweist, der strömungsmäßig mit einem evakuierten Raum (104) des vakuumisolierten Systems so verbunden ist, dass sich die Länge des Faltenbalges (108) bei einem Druckanstieg in dem evakuierten Raum über einen Schwellenwert hinaus verändert. Auf die Längenänderung des Faltenbalges spricht ein mit einem Energiespeicher (115) verbundener Positionsdetektor (113) an und gibt ein Signal ab. Der Positionsdetektor gibt ein Signal an eine Anzeigeeinrichtung (116) ab, die anzeigt, wenn ein Leck in dem vakuumisolierten System auftritt.

## Beschreibung

### Gebiet

Die Erfindung betrifft eine Überwachungseinrichtung zur Überwachung der Dichtigkeit eines vakuumisolierten Systems. Die Überwachungseinrichtung ist zum Beispiel dafür eingerichtet, um das Vakuum einer vakuumisolierten Transferleitung oder eines supraleitenden Kabelsystems zu überwachen. Die Erfindung betrifft außerdem eine Muffe zur Verbindung von zwei vakuumisolierten Systemen, bei denen es sich beispielsweise um einen Abschnitt einer Transferleitung oder eines supraleitenden Kabels handelt. Außerdem betrifft die Erfindung ein vakuumisoliertes System mit einer Überwachungseinrichtung und/oder mit einer Muffe gemäß der Erfindung. Schließlich betrifft die Erfindung auch ein Verfahren zur Nachrüstung eines vakuumisolierten Systems mit einer Überwachungseinrichtung.

### Hintergrund

Bei einem vakuumisolierten System handelt es sich zum Beispiel um ein Rohr oder eine Rohrleitung zur Führung eines gekühlten Mediums sein, beispielsweise eines tiefkalten flüssigen Gases, um das bzw. die herum eine nach außen durch ein metallisches Rohr abgeschlossene, unter Vakuum betriebene Vakuumisolierung vorhanden ist. Ein anderer häufiger Anwendungsfall für ein vakuumisoliertes System ist ein Kryostat für ein supraleitfähiges Kabel. Das vakuumisolierte System weist üblicherweise ein Außen- und ein Innenrohr auf, die durch einen evakuierten Raum getrennt sind, der für die thermische Isolierung eines Innenrohres sorgt. Der evakuierte Raum eines vakuumisolierten Systems ist üblicherweise durch eine metallische Wandung hermetisch dicht verschlossen. Der evakuierte Raum oder "Vakuumraum" kann grundsätzlich jeder hermetisch abgedichtete Raum sein, in dem ein mehr oder weniger starkes Vakuum aufrechterhalten werden soll. Auf eine derartige Vakuumisolierung beziehen sich die weiteren Ausführungen, stellvertretend für alle anderen Einsatzmöglichkeiten.

Um eine Undichtigkeit - im Folgenden kurz "Leck" genannt - in der dichten "Hülle" eines Vakuumraums zu erkennen, reicht eine Ansprechschwelle von einigen kPa aus. Üblich für eine Vakuumisolierung sind Drücke im Bereich von 10⁻³ Pa. Die Vakuumisolierung verliert ihre Wirksamkeit weitgehend im Bereich von 0,1 Pa. Beim Auftreten eines Lecks in dem die Vakuumisolierung begrenzenden äußeren Rohr wird nach kurzer Zeit ein Druck von ca. 10⁵ Pa erreicht, während bei einem Leck im Innenrohr nach kurzer Zeit ein dem Betriebsdruck entsprechender Druck von beispielsweise bis zu 2 MPa auftreten kann.

Zur Überwachung des Vakuums wird in der EP 1 953 517 A1 vorgeschlagen, einen metallischen Faltenbalg mit dem Vakuumraum hermetisch dicht zu verbinden. Wenn in dem Vakuumraum ein Leck auftritt, dann dehnt sich der Faltenbalg aus und betätigt einen Näherungsschalter, der ein Signal erzeugt, welches ein Leck anzeigt.

Der Faltenbalg der bekannten Überwachungseinrichtung ist an das Außenrohr des vakuumisolierten Systems angeschweißt. Der Annäherungsschalter ist an eine Stromversorgung angeschlossen, welche die für den Betrieb erforderliche elektrische Energie zur Verfügung stellt.

Hiervon ausgehend hat die vorliegende Erfindung die Aufgabe, eine Überwachungseinrichtung zur Überwachung der Dichtigkeit eines vakuumisolierten Systems zu schaffen, das einfacher anzubringen ist und/oder die Betriebssicherheit des vakuumisolierten Systems erhöht.

### Zusammenfassung der Erfindung

Zur Lösung dieser Aufgabe schlägt die Erfindung nach einem ersten Aspekt eine Überwachungseinrichtung zur Überwachung der Dichtigkeit eines vakuumisolierten Systems vor. Die Überwachungseinrichtung weist einen Faltenbalg auf, der strömungsmäßig mit einem evakuierten Raum des vakuumisolierten Systems so verbunden ist, dass sich die Länge des Faltenbalges bei einem Druckanstieg in dem evakuierten Raum über einen Schwellenwert hinaus verändert. Auf die Längenänderung des Faltenbalges spricht ein mit einem Energiespeicher verbundener Positionsdetektor an und gibt ein Signal ab.

Die Überwachungseinrichtung des vakuumisolierten Systems ist unabhängig von der in der Regel ohnehin vorhandenen Betriebssteuerung des Systems. Die Überwachungseinrichtung stellt somit ein redundantes Sicherheitssystem dar, das unabhängig von einer Betriebssteuerung funktioniert. Der Energiespeicher, der zum Beispiel eine Batterie oder ein Druckspeicher für ein Fluid sein kann, versorgt den Positionsdetektor mit Energie. Der Energiespeicher verleiht der Überwachungseinrichtung auch die Eigenschaft, unabhängig von der öffentlichen Stromversorgung zu funktionieren. Auf diese Weise wird vorteilhafter Weise eine höhere Betriebssicherheit für das vakuumisoliertes System erzielt.

Gemäß einer Ausführungsform ist die Überwachungseinrichtung auf einem Deckel angeordnet, der auf einen Flansch des vakuumisolierten Systems montierbar ist. Diese Ausführungsform der Überwachungseinrichtung ist einfach nachrüstbar, indem zum Beispiel ein Blinddeckel des vakuumisolierten Systems durch einen Deckel mit der darauf angeordneten Überwachungseinrichtung ersetzt wird.

Bei einer zweckmäßigen Weiterbildung der Überwachungseinrichtung ist der Positionsdetektor mit einer Anzeigeeinrichtung verbunden, die das Signal des Positionsdetektors empfängt und ein Leck in dem vakuumisolierten System anzeigt.

Die Anzeigeeinrichtung kann sich beispielsweise in einer Leitwarte befinden, sodass Betriebspersonal auf die Anzeige eines Lecks mit Gegenmaßnahmen oder Schutzmaßnahmen reagieren kann, zum Beispiel zusätzliche Vakuumpumpen anschaltet.

Vorteilhafterweise ist bei einem Ausführungsbeispiel der Positionsdetektor mit einer Sicherheitseinrichtung verbunden ist, die das Signal des Positionsdetektors empfängt und eine Maßnahme zur Sicherung des vakuumisolierten Systems auslöst. Der Vorteil von diesem Ausführungsbeispiel ist, dass auch ohne das aktive Eingreifen von Betriebspersonal Schutzmaßnahmen automatisch eingeleitet werden.

Mit Vorteil gibt der Positionsdetektor das Signal an die Anzeigeeinrichtung ab, wenn der Druckanstieg einen ersten Schwellenwert überschreitet, und gibt ein weiteres Signal an die Sicherheitseinrichtung ab, wenn der Druckanstieg einen zweiten Schwellenwert überschreitet.

Betriebspersonal kann bei dieser Ausführungsform zum Beispiel mit durch Einschalten einer oder mehrerer zusätzlicher Vakuumpumpen ein kleines Leck unter Kontrolle halten. Erst wenn der Druckanstieg einen zweiten Schwellenwert überschreitet werden automatisch Schutzmaßnahmen eingeleitet, indem zum Beispiel ein Überdruckventil geöffnet wird.

Nach einem zweiten Aspekt der Erfindung wird eine Muffe mit einer Überwachungseinrichtung nach dem ersten Aspekt der Erfindung vorgeschlagen, die in einer Außenwand der Muffe angeordnet ist. Die Muffe hat den Vorteil, dass damit vakuumisolierte Systeme auf einfache Art und Weise mit der Überwachungseinrichtung nachgerüstet werden können.

Nach einem dritten Aspekt der Erfindung wird ein vakuumisoliertes System mit einer Überwachungseinrichtung nach dem ersten Aspekt und/oder mit einer Muffe nach dem zweiten Aspekt der Erfindung vorgeschlagen.

Schließlich wird nach einem vierten Aspekt der Erfindung ein Verfahren zur Nachrüstung eines supraleitfähigen Kabelsystems mit einer Überwachungseinrichtung zur Überwachung der Dichtigkeit eines vakuumisolierten Systems vorgeschlagen. Das Verfahren umfasst
- Ersetzen eines Blinddeckels an dem vakuumisolierten System durch einen Deckel, auf dem die Überwachungseinrichtung installiert ist
   oder
- Demontieren eines Hilfsaggregates des vakuumisolierten Systems;
- Montieren einer Muffe nach dem zweiten Aspekt der Erfindung; und
- Montieren des zuvor demontierten Hilfsaggregates.

### Kurze Beschreibung der Zeichnung

Nachfolgend wird die Erfindung anhand von Ausführungsformen unter Bezugnahme auf die begleitenden Figuren exemplarisch näher erläutert. Alle Figuren sind rein schematisch und nicht maßstäblich. Es zeigen:
- Fig. 1: eine schematische Darstellung einer vakuumisolierten Rohrleitung mit einer Überwachungseinrichtung;
- Fig. 2: ein supraleitfähiges Kabelsystem mit Kühlanlage und Vakuumpumpe;
- Fig. 3: eine weitere Ausführungsform einer erfindungsgemäßen Überwachungseinrichtung;
- Fig. 4: eine Muffe mit einer erfindungsgemäßen Überwachungseinrichtung;
- Fig. 5A: ein Flussdiagramm für ein erstes Arbeitsverfahren zur Nachrüstung eines vakuumisolierten Systems; und
- Fig. 5B: ein Flussdiagramm für ein zweites Arbeitsverfahren zur Nachrüstung eines vakuumisolierten Systems.

Gleiche oder ähnliche Elemente sind in den Figuren mit gleichen oder ähnlichen Bezugszeichen versehen.

### Ausführungsbeispiel

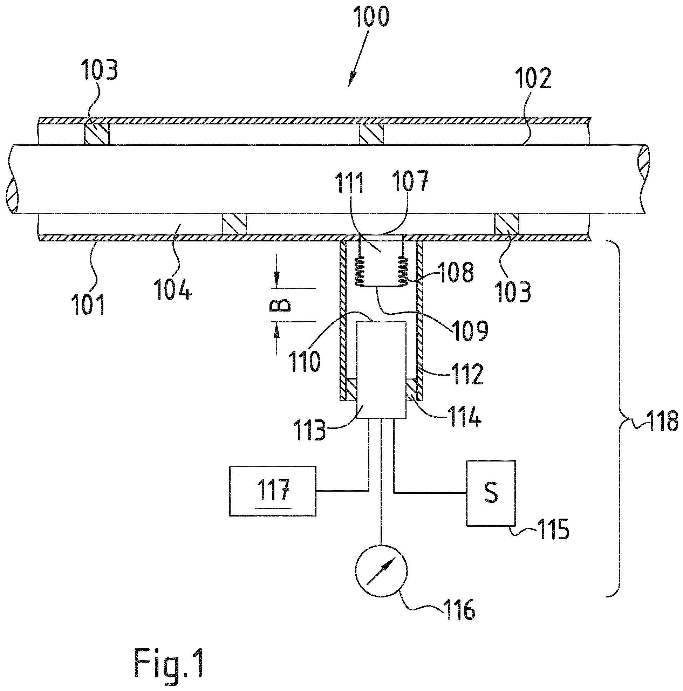

In Figur 1 ist rein schematisch eine vakuumisolierte Rohrleitung 100 dargestellt. Die vakuumisolierte Rohrleitung 100 kann eine Transferleitung sein, wie sie beispielsweise für den Transport von flüssigem Erdgas oder anderen tiefkalten Medien eingesetzt wird. Die Rohrleitung 100 kann auch ein Kabelkryostat eines supraleitenden Kabels sein. Die Rohrleitung 100 umfasst ein Außenrohr 101 sowie ein Innenohr 102, die durch Abstandshalter 103 relativ zueinander in Position gehalten sind. Die Abstandshalter 103 bewirken insbesondere, dass sich das Innenrohr und das Außenrohr nicht berühren, damit kein unerwünschter Wärmeübergang zwischen dem Innenrohr 102 und dem Außenrohr 101 erfolgt. Zwischen dem Außenrohr 101 und dem Innenrohr 102 befindet sich ein evakuierter Raum 104 oder Vakuumraum, der das Innenrohr, in welchem ein tiefkaltes Medium strömt, gegenüber dem Außenrohr thermisch isoliert. Wenn das vakuumisoliertes System Teil eines supraleitenden Kabelsystems ist, strömt in dem Innenrohr Kühlflüssigkeit - zum Beispiel flüssiger Stickstoff (LN2) - der den Supraleiter unter seine kritische Temperatur abkühlt.

Das Außenrohr 101 weist eine Öffnung 107 auf. Die Öffnung 107 ist mit einem metallischen Faltenbalg 108 hermetisch dicht verschlossen. Ein erstes Ende des Faltenbalges 108 ist mit einem Verschluss 109 vakuumdicht verschlossen, während ein zweites Ende des Faltenbalges 108 offen ist und über der Öffnung 107 des Außenrohrs 101 angeschweißt ist. Grundsätzlich sind auch andere Verbindungsarten möglich. Es kommt nur darauf an, dass die Verbindungen vakuumdicht sind. Ein Innenraum 111 des Faltenbalges 108 steht somit strömungsmäßig mit dem evakuierten Raum 104 in Verbindung. Der Faltenbalg 108 besteht aus Metall, beispielsweise aus Edelstahl mit einer Wandstärke von zum Beispiel 0,1 mm bis 0,4 mm. Für den Faltenbalg 108 kommen aber auch andere Materialien infrage, zum Beispiel Kupfer oder ein faserverstärkter Kunststoff. Um den Faltenbalg 108 herum ein Schutzrohr 112 angeordnet, das zum Beispiel auf dem Außenrohr 101 angeschweißt ist und den Faltenbalg 108 mit einem radialen Abstand umgibt. Auf der dem Faltenbalg 108 gegenüberliegenden Ende des Schutzrohres 112 ist ein Näherungsschalter 113 angeordnet, der mit einem Dichtelement 114 gegenüber einer Innenseite des Schutzrohres 112 abgedichtet ist. Der Faltenbalg 108 und der Näherungsschalter 113 sind von dem Schutzrohr 112 im Wesentlichen dicht umschlossen und dadurch gegenüber Umwelteinflüssen wirksam geschützt. Dennoch herrscht in dem Innenraum des Schutzrohres 112 ungefähr Atmosphärendruck.

Die Länge des Schutzrohres 112 ist so bemessen, dass der Faltenbalg 108 im entspannten Zustand sich an den Näherungsschalter 113 annähert, diesen aber nicht berührt. Der entspannte Zustand des Faltenbalges 108 stellt sich dann ein, wenn in dem normalerweise evakuierten Raum 104 Atmosphärendruck herrscht. In Figur 1 ist der Vakuumraum 104 evakuiert und der Faltenbalg 108 wird durch den Druckunterschied zwischen dem Innenraum das Faltenbalgs 108 und dessen Außenraum in Längsrichtung komprimiert.

Wenn bei einer Betriebsstörung der vakuumisolierten Rohrleitung 100 in dem evakuierten Raum 104 ein Überdruck entsteht, dann kommt der Verschluss 109 des Faltenbalges 108 mit einer Stirnseite 110 des Näherungsschalters 113 in Berührung und stützt den Faltenbalg 108 ab. Dadurch wird verhindert, dass der Faltenbalg 108 in einer Überdrucksituation beschädigt wird. Die so ausgebildete Überwachungseinrichtung 101 ist ein überaus robustes System.

Der Näherungsschalter 113 ist an einen Energiespeicher 115 angeschlossen. Bei dem Energiespeicher 115 handelt es sich bei einem Ausführungsbeispiel um eine elektrische Batterie. Darüber hinaus kann der Näherungsschalter auch an ein elektrisches Versorgungsnetz angeschlossen sein. Der Näherungsschalter 113 ist signalmäßig auch mit einer Auswerte- und Anzeigeeinrichtung 116 sowie mit einer Sicherheitseinrichtung 117 verbunden. Die Sicherheitseinrichtung 117 ist beispielsweise ein Entlastungsventil oder ähnliches. Vorzugsweise ist der Näherungsschalter zweistufig ausgeführt, d.h. bei ansteigendem Druck in dem evakuierten Raum wird bei Überschreiten eines ersten Schwellenwertes zunächst nur ein Signal an die Anzeigeeinrichtung 116 abgegeben und, wenn der Druck weiter ansteigt und einen zweiten Schwellenwert überschreitet, dann wird auch ein Signal an die Sicherheitseinrichtung 117 abgegeben, sodass die Sicherheitseinrichtung 117 anspricht.

Die an das Außenrohr 101 angeschweißten Komponenten bilden im Zusammenwirken mit dem Näherungsschalter 113 eine insgesamt mit dem Bezugszeichen 118 bezeichnete Überwachungseinrichtung, die das Vakuum in dem evakuierten Raum 104 der Rohrleitung 100 überwacht.

Bei anderen nicht dargestellten Ausführungsbeispielen umfasst die Überwachungseinrichtung 118 keinen Energiespeicher 115 und/oder keine Sicherheitseinrichtung 117.

Wenn bestehende Rohrleitungen 100 nachträglich mit einer in Figur 1 beschriebenen Überwachungseinrichtung 118 ausgerüstet werden sollen, erfordert dies aufwändige Schweißarbeiten, die aus praktischen Gründen nicht immer ausführbar sind.

Am Beispiel eines supraleitenden Kabelsystems soll eine alternative Ausführungsform der Überwachungseinrichtung beschrieben werden, die ohne Schweißarbeiten nachrüstbar ist.

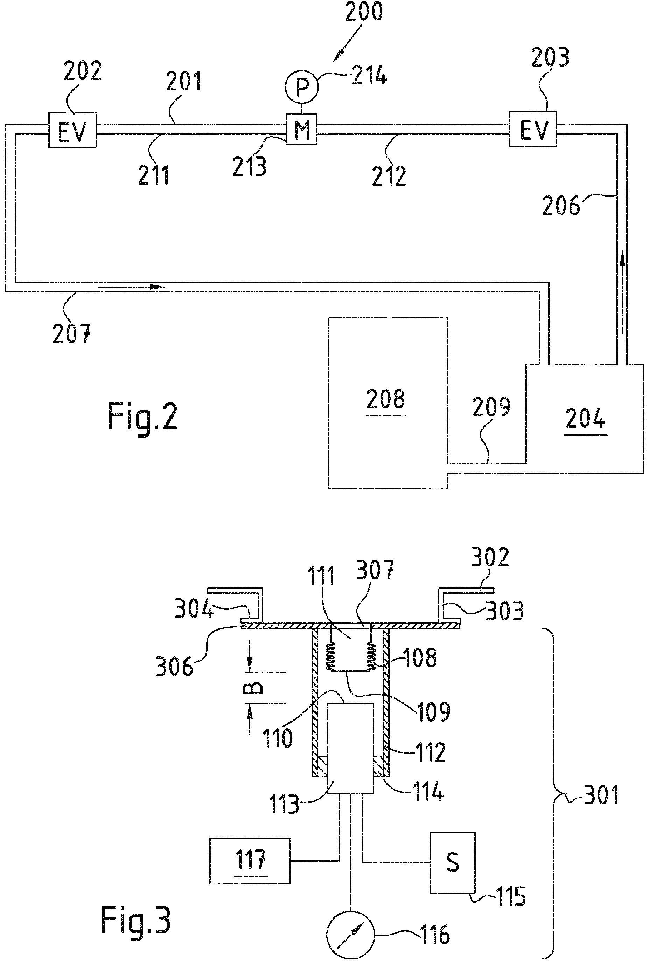

Zur Erläuterung wird in Figur 2 zunächst ein supraleitfähiges Kabelsystem 200 mit einem supraleitfähigen Kabel 201 dargestellt. Das supraleitfähige Kabel 201 ist beispielsweise ein Koaxialkabel mit drei Supraleitern, wie es zum Beispiel in dem deutschen Gebrauchsmuster DE 20 2019 003 381 beschrieben ist. Das supraleitfähige Kabel 201 ist an seinen Enden mit Endverschlüssen 202,203 versehen. Eine Kühlanlage 204 ist über eine Zufuhrleitung 206 für Kühlmittel mit dem Endverschluss 203 verbunden. Der Endverschluss 202 ist über eine Rückleitung 207 für Kühlmittel an die Kühlanlage 204 angeschlossen. Ein Kühlmittelvorratstank 208, der mit Vorteil als Kryotank ausgebildet ist, ist über eine Speiseleitung 209 mit der Kühlanlage 204 verbunden. Die Zufuhrleitung 206, die Rückleitung 207 sowie die Speiseleitung 209 sind vorzugsweise als Kryoleitungen ausgebildet, d.h. als doppelwandige vakuumisolierte Leitungen.

Das supraleitfähige Kabel 201 ist zweiteilig aus einem ersten supraleitfähigen Kabel 211 und einem zweiten supraleitfähigen Kabel 212 aufgebaut, die mit einer Verbindungsmuffe 213 miteinander verbunden sind. Die Verbindungsmuffe 213 stellt eine supraleitfähige Verbindung zwischen den einzelnen Supraleitern in den Kabeln 211 und 212 her.

An der Verbindungsmuffe ist außerdem eine Vakuumpumpe 214 angeschlossen, um das Vakuum in dem evakuierten Raum des supraleitenden Kabels 201 aufrecht zu erhalten. Außerdem ist an der Verbindungsmuffe 213 eine in Figur 3 dargestellte Überwachungseinrichtung 301 zur Überwachung des Vakuums in dem evakuierten Raum angeordnet. Im vorliegenden Fall handelt es sich bei dem evakuierten Raum um das Isoliervakuum des supraleitfähigen Kabels 201.

Figur 3 zeigt schematisch einen stark vergrößerten Ausschnitt aus einer Außenwand 302 der Verbindungsmuffe 213, wo die Überwachungseinrichtung 301 angeordnet ist. Innerhalb der Außenwand 302 der Verbindungsmuffe 213 herrscht das Isoliervakuum des supraleitfähigen Kabels 201. Die Außenwand 302 weist ein Anschlussrohr 303 auf, das endseitig mit einem Flansch 304 versehen ist. Das Anschlussohr 303 ist insbesondere ein ungenutzter Anschluss an der Verbindungsmuffe 213 oder an einer anderen Stelle in dem Kabelsystem 200. Auf den Flansch 304 ist ein Deckel 306 vakuumdicht montiert, der die Überwachungseinrichtung 301 trägt.

Der Deckel 306 weist eine Öffnung 307 auf. Die Öffnung 307 ist mit einem Faltenbalg 108 hermetisch dicht verschlossen und stellt eine strömungsmäßige Verbindung zu dem Isoliervakuum her. Im Übrigen ist die Überwachungseinrichtung 301 genauso aufgebaut wie die Überwachungseinrichtung 118.

Die in Figur 3 beschriebene Ausführungsform der Überwachungseinrichtung 301 ist auch für vakuumisolierte Rohrleitungen 100 geeignet, die tiefkalte Fluide transportieren.

Die Überwachungseinrichtungen 118 und 301 funktionieren auf gleiche Weise, die wie folgt beschrieben wird:
Im Betrieb ist die Rohrleitung 100 bzw. das supraleitfähige Kabelsystem 300 evakuiert einschließlich des Innenraums 111 des Faltenbalges 108. Im Folgenden wird der Kürze halber von einem vakuumisolierten System gesprochen, das sowohl eine Rohrleitung 100 bzw. ein supraleitfähiges Kabelsystem 300 sein kann. Der Druckunterschied zwischen dem Innenraum 111 und dem Raum außerhalb des Faltenbalges 108 führt dazu, dass der Faltenbalg 108 in seiner Längsrichtung komprimiert wird. Der komprimierte Zustand des Faltenbalges 108 ist in den Figuren 1 und 3 dargestellt. Dabei stellt sich ein Abstand B zwischen dem Verschluss 109 und der Stirnseite 110 des Näherungsschalters 113 ein. Der Abstand B ist so groß, dass der Näherungsschalter 113 nicht anspricht. Wenn ein Leck in dem vakuumisolierten System dazu führt, dass der Druck in dem evakuierten Raum und dem Innenraum des Faltenbalges 108 ansteigt, dehnt sich der Faltenbalg 108 aus und der Verschluss 109 nähert sich der Stirnseite 110 des Näherungsschalters 113 an. Sobald ein vorbestimmter erster Abstand unterschritten ist, der kleiner als der Abstand B ist, löst der Näherungsschalter 113 aus und gibt ein Signal an die Auswerte- und Anzeigeeinrichtung 116 ab. Der vorbestimmte erste Abstand korrespondiert mit dem ersten Schwellenwert des Drucks. Die Anzeigeeinrichtung 116 zeigt dann zum Beispiel in einem Leitstand an, dass ein Leck in dem vakuumisolierten System aufgetreten ist. Dadurch erhält das Bedienungspersonal Gelegenheit, Gegenmaßnahmen zu ergreifen zum Beispiel zusätzliche Pumpen anzuschalten oder den Transport von tiefkalten Medien oder elektrischem Strom durch das vakuumisolierte System zu drosseln oder gänzlich zu unterbrechen.

Wenn der Druck weiter ansteigt und einen zweiten Schwellenwert überschreitet, dann nähert sich der Verschluss 109 dem Näherungsschalter 113 bis zu einem zweiten Abstand an, der kleiner ist als der erste Abstand. Der Näherungsschalter 113 gibt dann auch ein Signal an die Sicherheitseinrichtung 117 ab. Die Sicherheitseinrichtung 117 ist zum Beispiel ein Entlastungsventil, das sich öffnet, wenn es signalmäßig angesprochen wird, um zu verhindern, dass bei einem Leck des Innenrohres durch Verdampfen des tiefkalten Mediums ein Überdruck in dem vakuumisolierten System entsteht, der zu Beschädigungen führen könnte. Ein besonderer Vorteil der Überwachungseinrichtung ist, dass sie auch dann noch funktioniert, wenn ein Stromausfall im allgemeinen Versorgungsnetz vorliegt, weil sie von dem Energiespeicher 115 mit der für den Betrieb notwendigen Energie versorgt wird. Dadurch wird eine erhöhte Betriebssicherheit des vakuumisolierten Systems erreicht.

Bei anderen Ausführungsbeispielen ist der Näherungsschalter 113 nur einstufig ausgebildet. Bei diesen Ausführungsbeispielen löst das Ansprechen des Näherungsschalters 113 entweder nur eine entsprechende Anzeige auf der Anzeigeeinrichtung 116 aus oder die Sicherheitseinrichtung 117 wird betätigt. Bei einem weiteren Ausführungsbeispiel erfolgt beides nacheinander oder gleichzeitig.

Bei einem abgewandelten Ausführungsbeispiel ist der Energiespeicher 115 ein Druckspeicher, der ein unter Druck stehendes Fluid, wie zum Beispiel Druckluft enthält, und der Näherungsschalter 113 ist als Fluidschalter ausgebildet, der mechanisch mit dem Faltenbalg 108 gekoppelt ist. Die mechanische Kopplung ist in Figur 3 nicht dargestellt.

Grundsätzlich funktioniert die Überwachungseinrichtung 118, 301 mit einem Druckspeicher genauso wie die zuvor beschriebenen Ausführungsbeispiele. Wenn ein erster Schwellenwert des Drucks in dem evakuierten Raum erreicht wird, verbindet der Näherungsschalter den Druckspeicher 115 strömungsmäßig mit der Anzeigeeinrichtung 116, auf der das Auftreten eines Lecks in dem vakuumisolierten System angezeigt wird. Wenn der zweite Schwellenwert überschritten wird, dann verbindet der Näherungsschalter den Druckspeicher 115 strömungsmäßig mit der der Sicherheitseinrichtung 117, sodass beispielsweise ein Entlastungsventil hydraulisch betätigt wird. Bei einem anderen Ausführungsbeispiel ist der Näherungsschalter nur einstufig ausgebildet.

Bei bereits bestehenden vakuumisolierten Systemen kommt es vor, dass kein ungenutztes Anschlussrohr in der Art des Anschlussrohres 303 zur Verfügung steht. In solchen Fällen ist es notwendig, zunächst einen solchen Anschluss zu schaffen, was mit aufwendigen Schweißarbeiten verbunden ist.

Alternativ dazu schlägt die vorliegende Erfindung vor, die Sicherheitseinrichtung in einer Zwischenmuffe anzuordnen, die zum Beispiel dort eingebaut werden kann, wo eine Vakuumpumpe in dem vakuumisolierten System installiert ist.

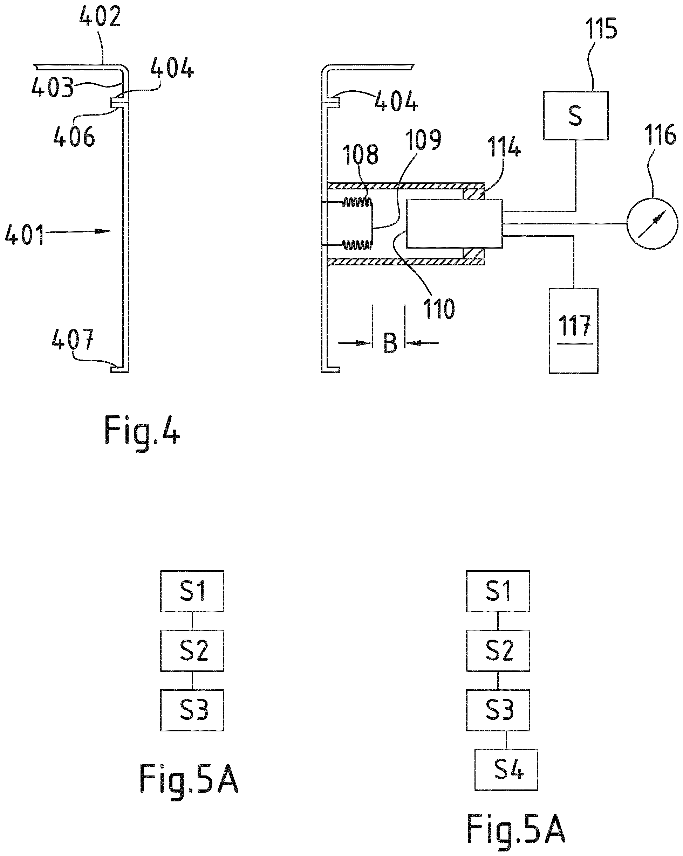

Figur 4 zeigt eine Zwischenmuffe 401 im Querschnitt. An einer Außenwand 402 des vakuumisolierten Systems ist ein Anschlussrohr 403 mit einem Flansch 404 angeordnet. In einer Ausgangssituation ist an dem Anschlussrohr 403 bzw. dem Flansch 404 eine Vakuumpumpe (nicht dargestellt) installiert. Die Vakuumpumpe wird demontiert, und ein Flansch 406 der Zwischenmuffe 401 wird vakuumdicht mit dem Flansch 404 verbunden. An einem gegenüberliegenden Ende weist die Zwischenmuffe einen Flansch 407 auf, der seinerseits wieder eine Anschlussmöglichkeit für die zunächst demontiert die Vakuumpumpe schafft. Die Überwachungseinrichtung 118 ist seitlich an der in einer Außenwand der Zwischenmuffe montiert und funktioniert in der gleichen Art und Weise wie es im Zusammenhang mit dem in Figur 1 und 3 dargestellten Ausführungsbeispielen beschrieben wurde. Die Vakuumpumpe ist hier nur beispielhaft für ein Hilfsaggregat des vakuumisolierten Systems genannt, mit dem der Flansch 406 in der Ausgangssituation belegt ist.

Figur 5A zeigt ein schematisches Flussdiagramm für ein erstes Arbeitsverfahren zur Nachrüstung eines vakuumisolierten Systems, mit einer erfindungsgemäßen Sicherheitseinrichtung. Dieses Verfahren ist bei Systemen anwendbar, bei denen ein nicht genutzter Anschlussflansch vorhanden ist. In einem ersten Schritt S1 wird ein Blinddeckel von einem nicht genutzten Anschluss 303 demontiert und danach in einem zweiten Schritt S2 ein Deckel 306 mit einer Überwachungseinrichtung 301 montiert. Anschließend werden in einem Schritt S3 die elektrischen Verbindungen bzw. Fluidleitungen zwischen dem Näherungsschalter 113, dem Energiespeicher 115, der Anzeigeeinrichtung 116 und der Sicherheitseinrichtung 117 eingerichtet. Bei Bedarf wird zwischen dem Flansch 304 und dem Deckel 306 ein Adapter angeordnet, um unterschiedliche Durchmesser des Flansches 304 und des Deckels 306 zu überbrücken.

Figur 5B zeigt ein schematisches Flussdiagramm für ein zweites Arbeitsverfahren zur Nachrüstung eines vakuumisolierten Systems, bei dem kein ungenutzter Anschlussflansch zur Verfügung steht. Bei diesem Verfahren besteht der erste Arbeitsschritt S1 darin, zunächst ein Hilfsaggregat, beispielsweise eine Vakuumpumpe, von einem Anschlussflansch des vakuumisolierten Systems zu demontieren. Dann wird in einem zweiten Schritt S2 eine Muffe 401 auf diesen frei gewordenen Flansch montiert. In einem Schritt S3 wird das zuvor demontierte Hilfsaggregat auf das freie Ende der Muffe 401 mit dem Flansch 407 montiert. Schließlich werden in einem Schritt S4 die elektrischen Verbindungen bzw. Fluidleitungen zwischen dem Näherungsschalter 113, dem Energiespeicher 115, der Anzeigeeinrichtung 116 und der Sicherheitseinrichtung 117 hergestellt. Im Bedarfsfall wird auch bei diesem Anwendungsfall zwischen dem Flansch 404 und der Muffe 401 bzw. zwischen dem Flansch 407 und dem Hilfsaggregat ein Adapter angeordnet, um unterschiedliche Durchmesser zu überbrücken.

**Bezugszeichenliste**

| | | | |
|---|---|---|---|
| 100 | Rohrleitung | 306 | Deckel |
| 101 | Außenrohr | 307 | Öffnung |
| 102 | Innenrohr | | |
| 103 | Abstandshalter | 401 | Zwischenrufe |
| 104 | Evakuierter Raum | 402 | Außenwand |
| 201 | Hohlraum | 403 | Anschlussrohr |
| | | 404 | Flansch |
| 107 | Öffnung | | |
| 108 | Faltenbalg | 406 | Flansch |
| 109 | Verschluss | 407 | Flansch |
| | | | |
| 111 | Innenraum des Faltenbalges | | |
| 112 | Schutzrohr | | |
| 113 | Näherungsschalter | | |
| 114 | Dichtelement | | |
| 115 | Energiespeicher | | |
| 116 | Anzeigeeinrichtung | | |
| 117 | Sicherheitseinrichtung | | |
| 118 | Überwachungseinrichtung | | |
| 201 | supraleitfähiges Kabel | | |
| 202,203 | Endverschluss | | |
| 204 | Kühlanlage | | |
| 206 | Zulauf | | |
| 207 | Rücklauf | | |
| 208 | Kühlmittel Vorratstank | | |
| 209 | Speiseleitung | | |
| 211 | Supraleitfähiger Kabelabschnitt | | |
| 212 | Supraleitfähiger Kabelabschnitt | | |
| 213 | Verbindungsmuffe | | |
| 214 | Pumpe | | |
| | | | |
| 301 | Überwachungseinrichtung | | |
| 302 | Außenwand | | |
| 303 | Anschlussrohr | | |
| 304 | Flansch | | |

## Patentansprüche

1. Überwachungseinrichtung (118,301) zur Überwachung der Dichtigkeit eines vakuumisolierten Systems (100, 200), mit einem Faltenbalg (108), der strömungsmäßig mit einem evakuierten Raum (104) des vakuumisolierten Systems (100,200) so verbunden ist, dass sich die Länge des Faltenbalges (108) bei einem Druckanstieg in dem evakuierten Raum über einen Schwellenwert hinaus verändert, worauf ein mit einem Energiespeicher (115) verbundener Positionsdetektor (113) anspricht und ein Signal abgibt.

2. Überwachungseinrichtung nach Anspruch 1, **dadurch gekennzeichnet, dass** die Überwachungseinrichtung auf einem Deckel (306) angeordnet ist, der auf einen Flansch (304) des vakuumisolierten Systems (100,200) montierbar ist.

3. Überwachungseinrichtung nach Anspruch 1 oder 2, **dadurch gekennzeichnet, dass** der Positionsdetektor (413) mit einer Anzeigeeinrichtung (416) verbunden ist, die das Signal des Positionsdetektors (413) empfängt und ein Leck in dem vakuumisolierten System (300) anzeigt.

4. Überwachungseinrichtung nach einem der vorstehenden Ansprüche, **dadurch gekennzeichnet, dass** der Positionsdetektor (113) mit einer Sicherheitseinrichtung (117) verbunden ist, die das Signal des Positionsdetektors (113) empfängt und eine Maßnahme zur Sicherung des vakuumisolierten Systems (100,200) auslöst.

5. Überwachungseinrichtung nach Anspruch 4, **dadurch gekennzeichnet, dass** der Positionsdetektor (113) das Signal an die Anzeigeeinrichtung (116) abgibt, wenn der Druckanstieg einen ersten Schwellenwert überschreitet und dass der Positionsdetektor (113) ein weiteres Signal an die Sicherheitseinrichtung (117) abgibt, wenn der Druckanstieg einen zweiten Schwellenwert überschreitet.

6. Muffe mit einer Überwachungseinrichtung (118) nach einem der vorstehenden Ansprüche, die in einer Außenwand der Muffe (401) angeordnet ist.

7. Supraleitfähiges Kabelsystem mit einer Überwachungseinrichtung nach einem oder mehreren der Ansprüche 1-5 und/oder einer Muffe nach Anspruch 6.

8. Verfahren zur Nachrüstung eines vakuumisolierten Systems mit einer Überwachungseinrichtung zur Überwachung der Dichtigkeit des vakuumisolierten Systems (100,200), wobei das Verfahren umfasst
- Ersetzen eines Blinddeckels an dem vakuumisolierten System durch einen Deckel (306), auf dem die Überwachungseinrichtung (301) installiert ist
oder
- Demontieren eines Hilfsaggregates des vakuumisolierten Systems;
- Montieren einer Muffe nach Anspruch 6; und
- Montieren des zuvor demontierten Hilfsaggregates.
